# FASCICULE DE BREVET EUROPEEN

(11) **EP 3 079 545 B1**
(45) Date de publication et mention de la délivrance du brevet: **13.09.2017**
(21) Numéro de dépôt: 14828198.3
(22) Date de dépôt: 05.12.2014
(51) Int. Cl.: A47J 43/044, A47J 43/046, A47J 43/06, A47J 43/07, A47J 43/08

(54) **APPAREIL ÉLECTROMENAGER DE PRÉPARATION CULINAIRE COMPORTANT UN SOCLE, UN BRAS INFÉRIEUR ET UN BRAS SUPÉRIEUR MONTE PIVOTANT SUR LE BRAS INFÉRIEUR**
HAUSHALTSVORRICHTUNG ZUR SPEISENZUBEREITUNG MIT EINEM UNTERARM UND EINEM DREHBAR AM UNTERARM MONTIERTEN OBERARM
HOUSEHOLD FOOD PREPARATION APPLIANCE COMPRISING A BASE, A LOWER ARM AND AN UPPER ARM PIVOTABLY MOUNTED ON THE LOWER ARM

(30) Priorité: 13.12.2013 FR 1362621
(43) Date de publication de la demande: 19.10.2016
(73) Titulaire: SEB S.A., 69130 Ecully (FR)
(72) Inventeur: BLOND, Laurent, F-21200 Beaune (FR)
(74) Mandataire: Bourrières, Patrice
(86) Numéro de dépôt international: PCT/FR2014/053196
(87) Numéro de publication internationale: WO 2015/086968

(56) Documents cités:
- EP-A1- 0 115 895
- DE-U1- 29 713 859
- FR-A1- 2 332 642
- FR-A1- 2 462 136
- US-A- 2 070 768
- US-A- 2 599 275
- US-A- 2 789 798

## Description

La présente invention se rapporte au domaine technique général des appareils électroménagers de préparation culinaire comportant un socle destiné à reposer à plat, et de manière amovible, sur un plan de travail, l'appareil comportant un bras inférieur porté par le socle et un bras supérieur monté pivotant sur le bras inférieur autour d'un unique axe parallèle au plan de travail et se rapporte plus particulièrement à un appareil dans lequel le bras supérieur comporte au moins un entraîneur entraîné en rotation par un moteur, l'entraîneur étant destiné à être accouplé à un accessoire pour le traitement des aliments.

Il est connu, de la demande de brevet FR 2 332 642, un appareil électroménager de préparation culinaire comprenant un socle destiné à reposer de manière amovible sur un plan de travail, un bras inférieur porté par le socle et un bras supérieur monté pivotant sur le bras inférieur autour d'un unique axe parallèle au plan de travail, le bras supérieur comportant plusieurs entraîneurs entraînés en rotation par un moteur, destinés à être accouplés à différents types d'accessoires pour le traitement des aliments.

Un tel appareil présente l'avantage de posséder un bras supérieur, de structure simple, pouvant occuper différentes positions de travail en fonction de l'accessoire à utiliser, pouvant ainsi être utilisé avec une plus grande variété d'accessoires.

Cependant, un tel appareil présente l'inconvénient d'être relativement encombrant, notamment en hauteur, rendant son rangement difficile. De plus, un tel appareil présente l'inconvénient d'être peu ergonomique à utiliser avec un récipient de mixage, ce dernier présentant l'inconvénient d'être perché au sommet du bras inférieur et de présenter une hauteur importante de sorte que l'utilisateur a un très mauvais accès à l'intérieur du récipient. Le document EP-A1-0 115 895 décrit un appareil électroménager de préparation culinaire selon le préambule de la revendication 1. Aussi, un but de la présente invention est de proposer un appareil électroménager de préparation culinaire remédiant à ces inconvénients, et notamment de proposer un appareil électroménager de préparation culinaire pouvant occuper une position de rangement dans laquelle l'appareil présente une grande compacité et pouvant être utilisé avec différents types d'accessoires avec une bonne ergonomie d'utilisation.

A cet effet, l'invention se rapporte à un appareil électroménager de préparation culinaire comportant un socle destiné à reposer à plat, et de manière amovible, sur un plan de travail, l'appareil comportant également un bras inférieur porté par le socle et un bras supérieur monté pivotant sur le bras inférieur autour d'un unique axe X' parallèle au plan de travail, le bras supérieur comportant au moins un entraîneur, entraîné en rotation par un moteur, destiné à être accouplé à un accessoire pour le traitement des aliments, caractérisé en ce que le bras inférieur est relié au socle par un dispositif d'articulation permettant le pivotement du bras inférieur sur le socle et en ce que les bras inférieur et supérieur peuvent occuper une position de rangement dans laquelle le bras inférieur s'étend parallèlement au socle, au dessus de ce dernier, et le bras supérieur s'étend le long du bras inférieur.

Une telle caractéristique permet d'offrir une position de rangement dans laquelle l'encombrement de l'appareil, notamment en hauteur, est fortement diminué, pouvant ainsi permettre le rangement de l'appareil dans un tiroir de meuble de cuisine. Selon l'invention, le dispositif d'articulation du bras inférieur permet un mouvement de pivotement du bras inférieur sur le socle autour d'un axe X parallèle à l'axe X'. Selon l'invention, le dispositif d'articulation permet une rotation du bras inférieur autour d'un axe Y, dit vertical, perpendiculaire au plan de travail, la rotation autour de l'axe Y s'effectuant sur un secteur angulaire supérieur ou égal à 180° et préférentiellement proche de 340°.

Une telle caractéristique présente l'avantage de permettre la rotation du bras inférieur sur 180° avant d'amener les bras inférieur et supérieur en position de rangement au dessus du socle, une telle rotation de 180° permettant d'amener la face supérieure du bras supérieur vers le sommet de l'appareil lorsque l'appareil occupe la position de rangement. Ainsi, la face supérieure du bras supérieur, qui présente habituellement une esthétique valorisante, reste visible lorsque les bras inférieur et supérieur sont en position de rangement. De plus, si cette face comporte un entraîneur, un bouton de commande, ou un écran d'affichage, il reste accessible lorsque l'appareil occupe la position de rangement.

Selon une autre caractéristique de l'invention, le moteur est disposé dans un logement formant une excroissance sur la face inférieure du bras supérieur, le logement s'insérant au moins partiellement dans une ouverture du bras inférieur lorsque le bras supérieur occupe la position de rangement.

Une telle caractéristique permet de conserver un bras supérieur de faible épaisseur et de limiter l'encombrement de l'appareil en position de rangement.

Selon une autre caractéristique de l'invention, l'ouverture est traversante et permet d'accéder à l'entraîneur lorsque le bras supérieur est replié le long du bras inférieur.

Une telle caractéristique permet d'offrir une position de travail dans laquelle un accessoire peut être connecté sur l'entraîneur porté par le bras supérieur lorsque ce denier est replié sur le bras inférieur.

Selon une autre caractéristique de l'invention, le bras supérieur comporte un premier entraîneur débouchant sur une face inférieure du bras supérieur et un second entraîneur débouchant sur une face supérieure du bras supérieur, le premier entraîneur étant entraîné par le moteur au travers d'un réducteur de vitesse, le second entraîneur étant en prise directe avec un arbre de sortie du moteur.

Une telle caractéristique permet d'avoir deux entraîneurs distincts dont la vitesse et l'emplacement sont optimisés pour fonctionner avec certains types d'accessoires pour obtenir à la fois de très bonnes performances et une très bonne ergonomie d'utilisation.

Selon une autre caractéristique de l'invention, la position de rangement constitue également une position de travail dans laquelle le second entraîneur vient s'accoupler avec un accessoire pour le traitement des aliments.

Une telle position de travail présente l'avantage d'être particulièrement adaptée pour l'utilisation de l'appareil avec un accessoire de type récipient de mixage, la position repliée des bras le long du socle permettant d'abaisser la hauteur de l'appareil pour une plus grande stabilité et une meilleure accessibilité au récipient de mixage.

Selon une autre caractéristique de l'invention, le bras supérieur comporte une poignée de préhension s'étendant au moins pour partie devant une extrémité libre du bras supérieur.

Une telle caractéristique permet d'offrir une excellente ergonomie dans la manipulation du bras supérieur pour modifier l'agencement de l'appareil.

Selon une autre caractéristique de l'invention, le bras inférieur est relié au socle par un premier dispositif d'articulation et le bras supérieur est relié au bras inférieur par un deuxième dispositif d'articulation, les premier et deuxième dispositifs d'articulation comportant des moyens de verrouillage permettant d'immobiliser les bras inférieur et supérieur dans au moins une position prédéterminée.

Une telle caractéristique permet d'immobiliser les bras inférieur et supérieur de l'appareil dans des positions de travail prédéterminées.

Selon une autre caractéristique de l'invention, le bras inférieur et le bras supérieur peuvent occuper une position de travail en équerre dans laquelle le bras inférieur est disposé sensiblement verticalement et le bras supérieur est disposé sensiblement perpendiculairement au bras inférieur.

Une telle caractéristique permet à l'appareil d'occuper une position optimisée pour son fonctionnement avec un accessoire, de type outil de pétrissage ou de malaxage, comprenant des outils venant plonger directement dans une cuve disposée sur le socle.

Selon une autre caractéristique de l'invention, le bras inférieur et le bras supérieur peuvent occuper une position de travail verticale dans laquelle le bras inférieur est disposé sensiblement verticalement et le bras supérieur est replié le long du bras inférieur.

Une telle caractéristique permet à l'appareil d'occuper une position optimisée pour son fonctionnement avec un accessoire muni d'une goulotte pour l'introduction des aliments et d'une sortie rejetant directement les aliments traités dans une assiette disposée sur le socle.

Selon une autre caractéristique de l'invention, le moteur est alimenté électriquement par un cordon d'alimentation pénétrant dans l'appareil au niveau du socle et s'étendant à l'intérieur du bras inférieur et du bras supérieur, les bras inférieur et supérieur comportant une structure creuse.

Une telle caractéristique permet de limiter la gêne du cordon d'alimentation lors de la manipulation des bras supérieur et inférieur de l'appareil, le cordon ne venant pas s'enrouler autour des bras.

Selon une autre caractéristique de l'invention, le moteur est disposé dans le bras supérieur, de préférence transversalement à ce dernier.

Une telle caractéristique permet de disposer le moteur au plus près de l'entraîneur, évitant ainsi l'utilisation d'un dispositif coûteux de transmission de mouvement.

De manière préférentielle, l'épaisseur des bras inférieur et supérieur est dimensionnée de telle sorte que l'épaisseur totale des bras supérieur et inférieur en position repliée corresponde sensiblement à la longueur du moteur disposé en position transversale, pour une plus grande compacité de l'appareil en position repliée.

De manière préférentielle, le moteur est un moteur à courant continu.

Selon une autre caractéristique de l'invention, le socle comporte un plateau amovible sur lequel peut être disposé un récipient de travail, le plateau recouvrant une cavité munie de moyens de verrouillage d'un récipient de travail.

Une telle caractéristique présente l'avantage de permettre à la fois l'utilisation de l'appareil avec un récipient standard reposant directement sur le plateau amovible ou l'utilisation de l'appareil avec un récipient spécifique, muni de moyens coopérant avec les moyens de verrouillage de la cavité pour assurer l'immobilisation du récipient de travail sur le socle, une telle immobilisation étant particulièrement utile lorsque l'appareil est utilisé pour réaliser des préparations générant des contraintes nécessitant un maintien ferme du récipient de travail sur le socle, tel que par exemple le pétrissage des aliments.

On comprendra mieux les buts, aspects et avantages de la présente invention, d'après la description donnée ci-après d'un mode particulier de réalisation de l'invention présenté à titre d'exemple non limitatif, en se référant aux dessins annexés dans lesquels :
- la figure 1 est une vue en perspective d'un appareil de préparation culinaire selon un mode particulier de réalisation de l'invention ;
- la figure 2 est une vue en perspective de l'appareil de la figure 1 avec le premier dispositif d'articulation représenté partiellement éclaté ;
- la figure 3 est une vue de détail, en perspective partiellement éclatée, du premier dispositif d'articulation reliant le socle au bras inférieur ;
- les figures 4 et 5 sont des vues en perspective de l'appareil avec le deuxième dispositif d'articulation représenté partiellement éclaté ;
- la figure 6 est une vue en perspective, partiellement éclatée, d'une partie du système de verrouillage du deuxième dispositif d'articulation ;
- la figure 7 est une vue en coupe longitudinale de l'appareil dans une position de rangement ;
- la figure 8 est une vue de côté de l'appareil de la figure 1 avec le bras en position relevée ;
- la figure 9 est une vue en coupe longitudinale de l'appareil selon la ligne IX-IX de la figure 8 ;
- la figure 10 est une vue en perspective de l'appareil de la figure 1 dans une position de travail en équerre dans laquelle le bras supérieur est équipé de crochets de pétrissage, et d'une cuve fixée sur le socle ;
- la figure 11 est une vue en perspective partiellement éclatée de l'adaptateur assurant l'entraînement des crochets de pétrissage de la figure 10 ;
- la figure 12 est une en perspective de l'appareil de la figure 1 équipé d'un fouet, l'appareil étant représenté avec le bras supérieur en position relevée et le bras inférieur pivoté de l'ordre de 90° sur le socle ;
- la figure 13 est une vue en perspective de l'appareil de la figure 1 dans une position de travail verticale ;
- la figure 14 est une vue de l'appareil de la figure 1 dans la position de travail verticale et équipé d'un boitier réducteur de vitesse ;
- les figures 15 et 16 sont des vues en perspective de l'appareil de la figure 13 accouplé respectivement à un accessoire pour râper les aliments et à un accessoire hachoir ;
- la figure 17 est une vue en perspective partiellement éclatée du boitier réducteur de vitesse ;
- les figures 18 et 19 sont respectivement des vues en perspective et de côté de l'appareil dans une position de travail horizontale, cette position de travail correspondant également à la position de rangement ;
- la figure 20 est une vue en perspective de l'appareil dans la position de travail horizontale accouplé avec un bol de mixage.

Seuls les éléments nécessaires à la compréhension de l'invention ont été représentés. Pour faciliter la lecture des dessins, les mêmes éléments portent les mêmes références d'une figure à l'autre.

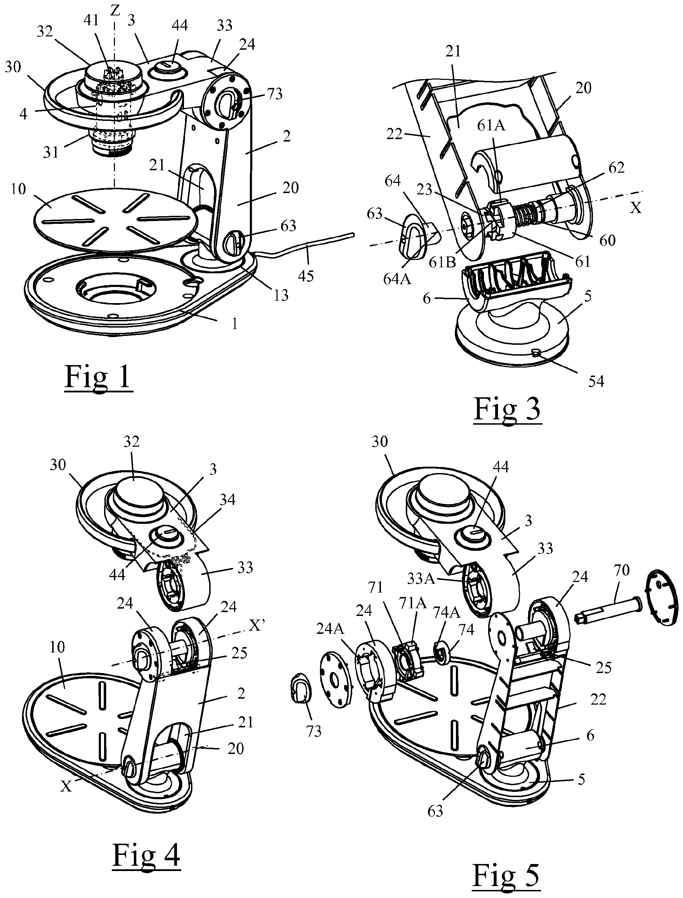

La figure 1 représente un appareil électroménager de préparation culinaire comprenant un socle 1 destiné à reposer à plat sur un plan de travail, le socle 1 comprenant un plateau 10 amovible, circulaire, muni d'un revêtement antidérapant, tel un revêtement silicone, sur lequel peut être disposé un récipient de travail.

Conformément à cette figure, l'appareil comporte un bras inférieur 2, sensiblement rectiligne, relié au socle 1 par un premier dispositif d'articulation et comprend un bras supérieur 3, sensiblement rectiligne, comprenant une extrémité arrière reliée au bras inférieur 2 par un deuxième dispositif d'articulation.

De manière préférentielle, le bras supérieur 3 comporte une extrémité avant, libre, entourée d'une poignée 30 de préhension en forme d'anse annulaire prenant naissance sur les bords latéraux du bras supérieur 3 et passant devant l'extrémité libre du bras supérieur 3 en s'étendant dans le plan du bras supérieur 3.

A titre d'exemple, le bras inférieur 2 présente une longueur de l'ordre de 32 cm et le bras supérieur 3 présente une longueur de l'ordre de 28 cm, la poignée 30 de préhension présentant un diamètre de l'ordre de 20 cm et étant positionnée sur le bras supérieur 3 de telle sorte que la longueur hors tout du bras supérieur 3 muni de la poignée 30 corresponde sensiblement à la longueur du bras inférieur 2.

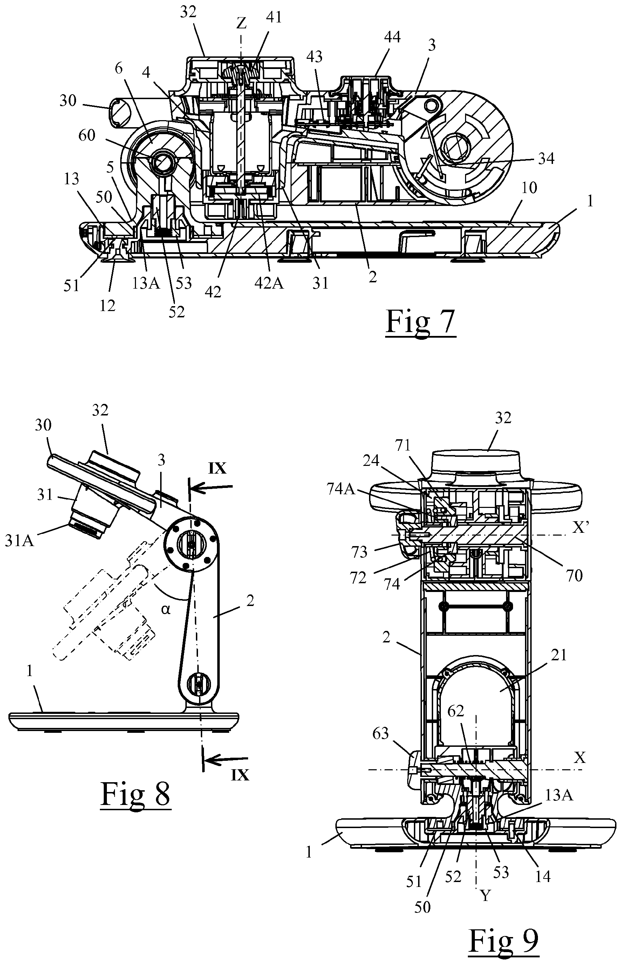

Conformément à la figure 7, le bras supérieur 3 comporte une structure creuse qui renferme, à proximité de son extrémité libre, un moteur 4 représenté en pointillé sur la figure 1, le moteur 4 s'étendant selon un axe Z transversal à l'axe longitudinal du bras supérieur 3 et étant disposé dans un logement 31 formant une excroissance sur une face inférieure du bras supérieur 3.

De manière préférentielle, le moteur 4 comporte un arbre de sortie comprenant une extrémité supérieure qui est reliée directement à un entraîneur 41 à haute vitesse débouchant sur une face supérieure du bras supérieur 3, cet entraîneur 41 étant masqué par un couvercle de protection 32 amovible, visible sur la figure 1. L'arbre de sortie du moteur 4 comprend également une extrémité inférieure reliée à un entraîneur 42 à vitesse réduite, visible notamment sur la figure 7, débouchant à l'extrémité inférieure du logement 31, cet entraîneur 42 tournant également autour de l'axe Z du moteur 4 et étant relié à l'arbre de sortie du moteur 4 par l'intermédiaire d'un réducteur de vitesse 42A, de type à train épicycloïdal.

A titre d'exemple, le moteur 4 est un moteur à courant continu, tel qu'un moteur de la série 900 commercialisé par la société Johnson, et sa vitesse de rotation nominale est de l'ordre de 11 000 tr/min, le réducteur de vitesse 42A étant dimensionné pour que la vitesse de l'entraîneur 42 soit de l'ordre de 1500 tr/min lorsque le moteur tourne à 11 000 tr/min.

Le moteur 4 est piloté, de manière connue en soi, par une carte de commande 43 de type carte à thyristors, visible sur la figure 7, disposée dans le bras supérieur 3, la carte de commande 43 étant reliée à un bouton de commande 44 disposé sur la face supérieure du bras supérieur 3, permettant de piloter le fonctionnement du moteur 4.

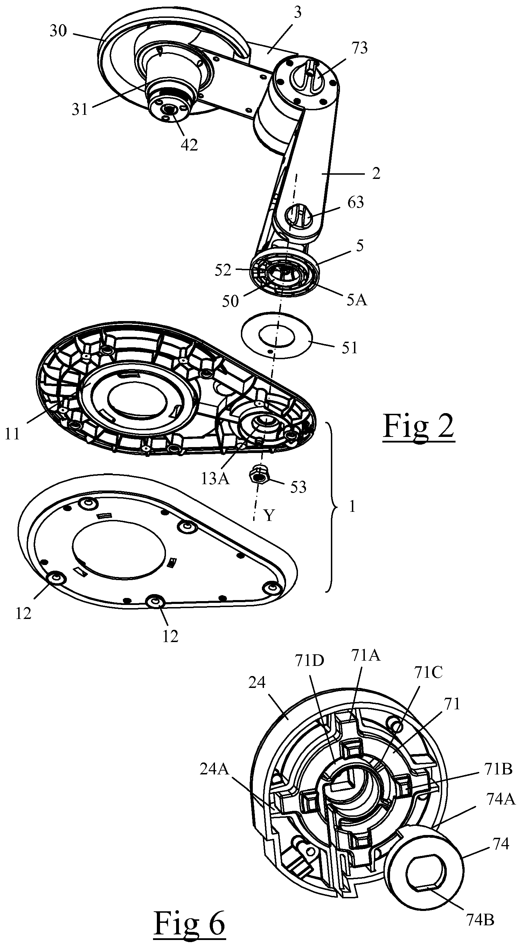

Comme on peut le voir sur la figure 2, le socle 1 comprend une face inférieure munie de plusieurs ventouses 12 permettant au socle 1 d'adhérer fermement au plan de travail et comporte un lest 11, avantageusement de l'ordre de 1 kg, assurant la stabilité à l'appareil quelque soit la position des bras supérieur 3 et inférieur 2.

Le premier dispositif d'articulation, reliant le socle 1 au bras inférieur 2, comporte une embase 5 circulaire montée rotative dans un logement 13 du socle autour d'un axe Y, dit vertical, s'étendant perpendiculairement au plan du socle 1, l'embase 5 comportant une bague de guidage 50 assurant le glissement entre l'embase 5 et un cône central 13A de guidage ménagé dans le fond du logement 13, une plaque de glissement 51 étant avantageusement interposée entre l'embase 5 et le socle 1.

L'embase 5 circulaire est rendue solidaire du socle 1 par une vis creuse 52, mieux visible sur la figure 9, sur laquelle vient s'engager un écrou 53 intégré dans le socle 1, la vis creuse 52 comportant un orifice central permettant le passage d'un cordon 45 d'alimentation du moteur 4, représenté uniquement sur la figure 1, pénétrant dans le socle 1 et s'étendant à l'intérieur du bras inférieur 2 et du bras supérieur 3 pour rejoindre la carte de commande 43 du moteur 4.

De manière préférentielle, des moyens butés, avantageusement constitués par un doigt 14 porté par le socle 1 et s'engageant dans une rainure 5A ménagée sur la face inférieure de l'embase 5 circulaire, limitent la rotation de l'embase 5 à un secteur angulaire de l'ordre de 340° afin de limiter les contraintes de torsion sur le cordon 45 d'alimentation.

Conformément aux figures 3 et 9, le bras inférieur 2 comporte une extrémité inférieure en forme de U comprenant deux branches 20 venant s'engager de part et d'autre d'un fût 6 cylindrique supporté par l'embase 5 en ménageant au dessus de ce fût 6 une ouverture traversante 21, le fût 6 renfermant un arbre 60 sur lequel une armature 22 métallique intégrée dans la structure creuse du bras inférieur 2 est montée pivotante permettant au bras inférieur 2 de tourner autour d'un axe X, dit horizontal, parallèle au plan du socle 1.

La rotation du bras inférieur 2 autour de l'arbre 60 est préférentiellement bloquée dans deux positions prédéterminées par un système de verrouillage comportant un crabot baladeur 61 qui est mobile en translation sur l'arbre 60, le crabot baladeur 61 étant bloqué en rotation dans le fût 6 cylindrique par l'engagement de nervures axiales portées par le fût 6 cylindrique, non visibles sur les figures, dans des rainures axiales 61A portées par le crabot baladeur 61.

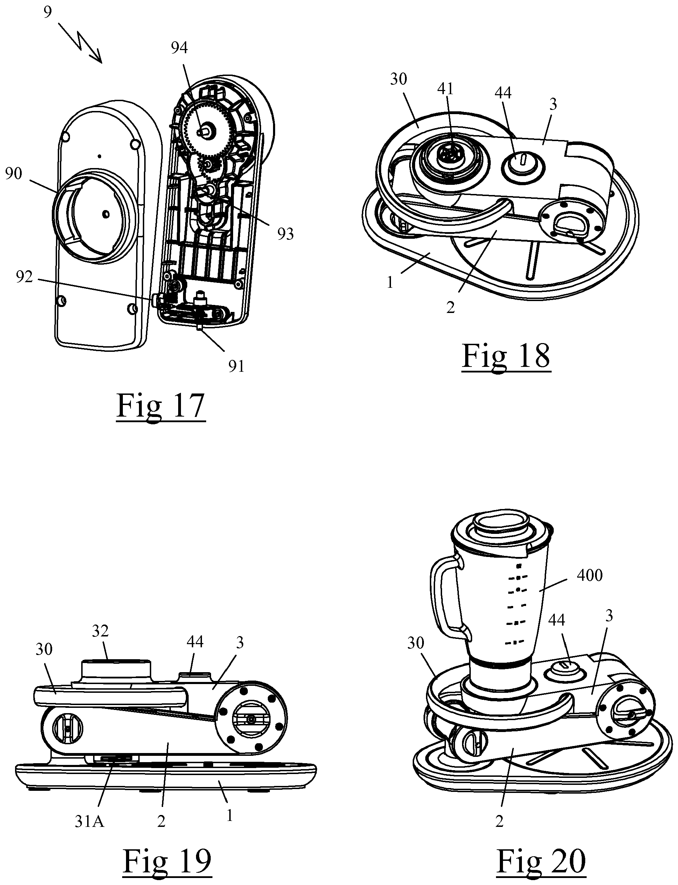

Le crabot baladeur 61 est ramené par un ressort de rappel 62 contre une bague 23 crantée solidaire de l'armature 22 du bras inférieur, la bague 23 comportant quatre crans répartis à 90° les uns de autres et adaptés pour recevoir quatre dents du crabot baladeur 61 lorsque le bras inférieur 2 occupe une position verticale, illustrée notamment sur les figures 1 et 8, dans laquelle il est disposé sensiblement perpendiculairement au plan du socle 1, et lorsqu'il occupe une position sensiblement horizontale, illustrée notamment sur les figures 18 et 19, dans laquelle le bras inférieur 2 s'étend le long du socle 1, l'engagement des dents du crabot baladeur 61 dans les crans de la bague 23 permettant d'immobiliser automatiquement le bras inférieur 2 dans ces deux positions.

Comme on peut le voir sur la figure 3, le système de verrouillage comporte un bouton 63 de déverrouillage disposé sur une face latérale du bras inférieur 2, à l'extrémité axiale de l'arbre 60, le bouton 63 de déverrouillage comprenant un manchon 64 s'engageant autour de l'arbre 60 et comprenant une extrémité biseautée formant une came d'actionnement 64A venant coopérer avec un chemin de came 61B de forme complémentaire porté par le crabot baladeur 61 pour repousser ce dernier à l'encontre du ressort de rappel 62 et faire sortir les dents du crabot baladeur 61 des crans de la bague 23 lorsque le bouton 63 est tourné de 90° dans un sens.

Conformément aux figures 4 et 5, le deuxième dispositif d'articulation reliant le bras inférieur 2 au bras supérieur 3 comporte un arbre 70 s'étendant parallèlement à l'arbre 60 du premier dispositif d'articulation, cet arbre 70 étant porté par deux supports 24 circulaires formés à l'extrémité supérieure du bras inférieur 2, ces deux supports 24 ménageant entre eux un espace dans lequel vient s'engager un tronçon 33 circulaire de forme complémentaire formé à l'extrémité postérieure du bras supérieur 3 pour réaliser une liaison de type charnière autorisant un pivotement du bras supérieur autour d'un axe X' parallèle à l'axe X.

De manière préférentielle, les deux supports 24 circulaires présentent un diamètre correspondant au double de l'épaisseur, en vue de profil, des bras inférieur 2 et supérieur 3 au niveau de leur jonction avec les supports 24 circulaires, le bras inférieur 2 présentant avantageusement une épaisseur se réduisant progressivement du premier dispositif d'articulation vers les supports 24 circulaires et le bras supérieur 3 présentant avantageusement une épaisseur se réduisant progressivement du deuxième dispositif d'articulation vers l'extrémité libre du bras supérieur 3 de sorte que, lorsque les bras supérieur 3 et inférieur 2 sont superposés, comme illustré sur la figure 19, ils forment un bloc compact présentant deux faces externes parallèles venant dans le prolongement du bord périphérique des supports 24 circulaires.

Le bras supérieur 3 comporte avantageusement un ressort de rappel 34, illustré en pointillé sur la figure 4, comportant une extrémité prenant appui sur une butée 25 portée par le bras inférieur 2 pour générer une force tendant à écarter le bras supérieur 3 du bras inférieur 2 lorsque le bras supérieur 3 est replié sur le bras inférieur 2, la butée 25 étant avantageusement positionnée de telle sorte que l'effort généré par le ressort de rappel 34 amène automatiquement le bras supérieur 3 dans une position de repos dans laquelle il fait un angle a de l'ordre de 45° par rapport au bras inférieur 2, tel qu'illustré en trait mixte sur la figure 8, l'utilisateur devant ensuite saisir manuellement le bras supérieur 3 pour ouvrir davantage l'angle α, l'extrémité du ressort de rappel 34 n'étant alors plus en contact avec la butée 25.

De manière préférentielle, le bras inférieur 2 comporte également une seconde butée, non visible sur les figures, contre laquelle l'extrémité du ressort de rappel 34 vient prendre appui lorsque l'ouverture du bras supérieur 3 atteint 115°, position illustrée en trait plein sur la figure 8, de manière à générer un effort venant freiner l'ouverture du bras supérieur 3, sans la bloquer, lorsque l'utilisateur exerce une traction vers le haut sur la poignée 30 pour ouvrir le bras supérieur 3 au-delà de l'ouverture à 115°.

Conformément à la figure 5, le deuxième dispositif d'articulation comporte un système de verrouillage du bras supérieur 3 agissant au niveau de l'un des supports 24 circulaires, ce système de verrouillage comportant un crabot baladeur 71 qui est mobile en translation sur l'arbre 70 et coulisse dans la pièce support 24 en étant bloqué en rotation dans cette dernière par l'engagement de quatre doigts radiaux 71A dans des rainures 24A adaptées de la pièce support 24.

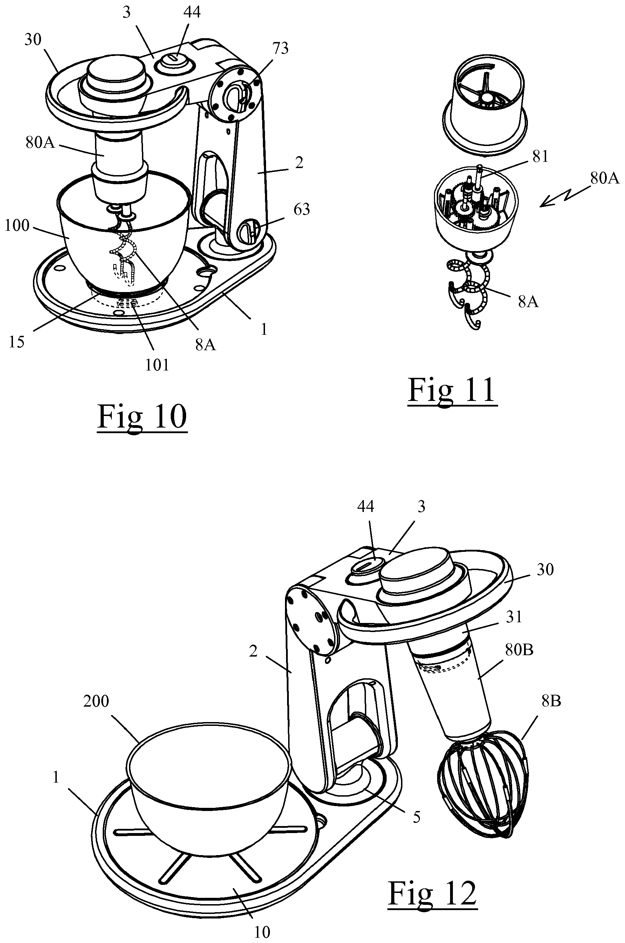

Le crabot baladeur 71 est amené par un ressort de rappel 72, visible uniquement sur la figure 9, contre une face latérale du tronçon 33 circulaire du bras supérieur 3, le crabot baladeur 71 comportant quatre ergots 71B, répartis à 90° les uns des autres, venant s'engager dans quatre empreintes 33A ménagées sur la face latérale du tronçon 33 pour assurer le blocage en rotation du bras supérieur 3 lorsque le bras supérieur 3 est disposé perpendiculairement au bras inférieur 2, ainsi que cela est illustré notamment sur les figures 1 et 10, et lorsque le bras supérieur s'étend le long du bras inférieur 2, ainsi que cela est illustré notamment sur les figures 18, 19 et 20.

Le système de verrouillage comporte un bouton 73 de déverrouillage disposé sur une face latérale du bras inférieur 2 et solidaire en rotation de l'arbre 70 en étant engagé sur une partie de section carrée disposée à l'extrémité axiale de l'arbre 70. Le système de déverrouillage comporte également une bague 74 de déverrouillage disposée sur l'arbre 70 entre le crabot baladeur 71 et le tronçon 33 circulaire du bras supérieur 3.

Conformément à la figure 6, cette bague 74 rendue solidaire en rotation de l'arbre 70 par des méplats 74B vient s'insérer dans une cavité ménagée au niveau de la périphérie interne du crabot baladeur 71 et comporte une came d'actionnement 74A venant coopérer avec un bord 71 C d'une lumière 71D ménagée dans le crabot baladeur 71 pour repousser ce dernier à l'encontre du ressort de rappel 72 lorsque le bouton 73 est tourné dans le sens horaire de manière à faire sortir les ergots 71B des empreintes 33A et permettre la libre rotation du bras supérieur 3.

Les premier et deuxième dispositifs d'articulation ainsi réalisés permettent d'immobiliser les bras inférieur 2 et supérieur 3 dans une première position de travail, dite en équerre, illustrée sur la figure 1, dans laquelle le bras inférieur 2 est disposé sensiblement perpendiculairement au socle 1 et le bras supérieur 3 s'étend au dessus du socle 1 en étant disposé sensiblement parallèlement à ce dernier.

Une telle position de travail est particulièrement adaptée pour l'utilisation de l'appareil avec un accessoire pour malaxer les aliments ou avec un accessoire pour émulsionner une préparation disposée dans une cuve reposant sur le socle 1.

Ainsi, la figure 10 illustre l'utilisation de l'appareil accouplé avec un accessoire de pétrissage comportant deux crochets 8A de pétrissage pour la réalisation de pâte. Lors de l'utilisation des crochets 8A de pétrissage, le plateau 10 amovible est préférentiellement retiré du socle 1 et une cuve 100 dédiée à la fonction pétrissage est disposée sur le socle 1.

Cette cuve 100 comporte une embase cylindrique venant s'engager dans une cavité 15 adaptée, ménagée dans le socle 1 sous le plateau 10 amovible, l'embase cylindrique comportant des ergots de verrouillage 101 venant coopérer avec des nervures, non visibles, ménagées en bordure de la cavité 15 pour réaliser une liaison de type baïonnette et assurer l'immobilisation de la cuve 100 sur le socle 1.

Les crochets 8A de pétrissage sont entraînés au travers d'un adaptateur 80A venant s'engager sur un manchon d'accouplement 31A entourant l'entraîneur 42 à vitesse réduite, la hauteur des crochets 8A et de l'adaptateur 80A étant adaptée pour que l'extrémité inférieure des crochets 8A parvienne à proximité immédiate du fond de la cuve 100 lorsque les bras inférieure 2 et supérieur 3 de l'appareil occupent la position de travail en équerre.

L'adaptateur 80A, illustré isolément sur la figure 11, referme un arbre 81 venant s'accoupler avec l'entraîneur 42 et un train d'engrenages permettant d'entraîner les deux crochets 8A en sens contraire à une vitesse de l'ordre de 200 à 250 tr/min lors de la rotation de l'entraîneur 42 à une vitesse de l'ordre de 1500 tr/min.

Lorsque l'utilisateur a terminé sa préparation, il arrête le moteur 4 à l'aide du bouton de commande 44, puis déverrouille d'une main le bras supérieur 3 en faisant tourner le bouton 73 et saisit la poignée 30 pour relever le bras supérieur 3 de manière à sortir les crochets 8A de pétrissage de la cuve 100 et à faire pivoter les bras inférieur 2 et supérieur 3 autour de l'axe vertical Y du premier dispositif d'articulation de manière à dégager l'accès à la cuve 100.

Un tel mouvement des bras inférieur 2 et supérieur 3 pour dégager l'accès au socle 1 est par exemple illustré sur la figure 12, où l'appareil est accouplé à un accessoire pour la réalisation d'émulsion comportant un fouet 8B à brins flexibles, tel que décrit dans la demande de brevet FR 2 971 689 déposée par la demanderesse.

Dans cette configuration de l'appareil, le fouet 8B est entraîné directement à la vitesse de l'entraîneur 42 à vitesse réduite et comporte une douille 80B venant s'accoupler au manchon d'accouplement 31A entourant l'entraîneur 42.

Ce fouet 8B est préférentiellement utilisé avec un récipient 200, de type saladier, qui est posé librement sur le plateau 10, ce dernier étant rapporté sur le socle 1 pour masquer la cavité 15, le revêtement antidérapant du plateau 10 assurant une stabilisation du récipient 200 sur le socle 1.

La longueur de la douille 80B est dimensionnée de telle sorte que l'extrémité inférieure des brins souples du fouet 8B vienne toucher le fond du récipient 200 disposé sur le socle 1 lorsque les bras supérieur 3 et inférieur 2 occupent la position de travail en équerre, l'utilisateur pouvant toujours, si nécessaire, déplacer manuellement le récipient 200 pour amener le fouet 8B dans les éventuelles zones du récipient 200 où l'émulsion des ingrédients n'est pas correctement réalisée.

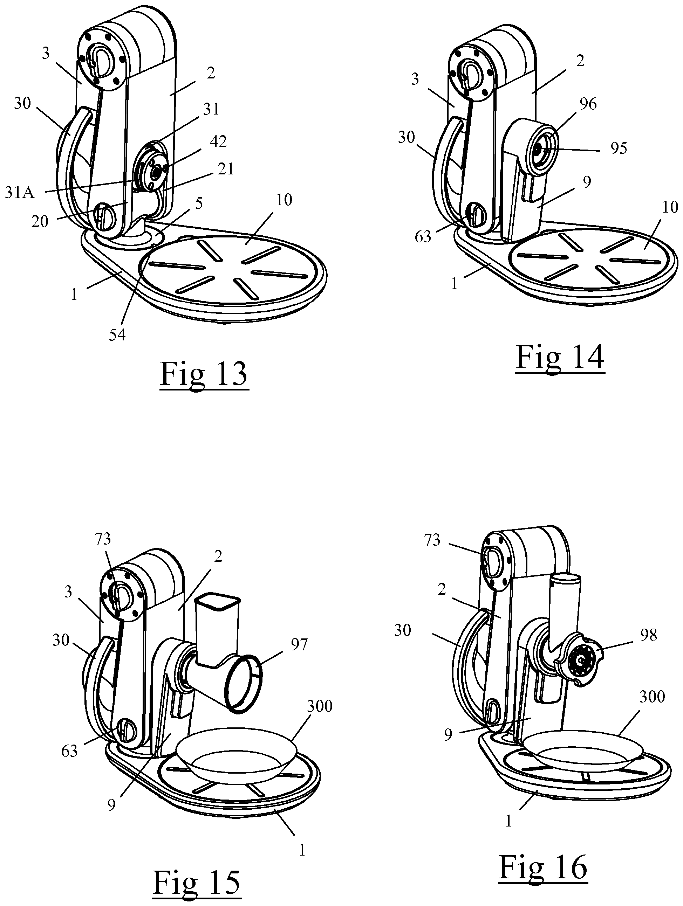

La figure 13 illustre l'appareil dans une deuxième position de travail, dite verticale, dans laquelle le bras inférieur 2 est disposé verticalement et l'embase 5 circulaire est tournée de 180° autour de son axe vertical Y, le bras supérieur 3 étant replié le long du bras inférieur 2 de manière à former un angle α nul avec ce dernier.

Dans cette position de travail verticale, le logement 31 renfermant le moteur 4 est engagé dans l'ouverture traversante 21 ménagée entre les branches 20 du bras inférieur 2 et l'entraîneur 42 à vitesse réduite débouche vers le plateau 10 du socle 1.

Comme cela est illustré sur la figure 14, cette position de travail verticale permet l'accouplement d'un boitier 9 réducteur de vitesse à l'entraîneur 42 du bras supérieur 3, ce boitier 9, illustré isolément sur la figure 17, comportant une bague 90 qui vient s'accoupler par rotation d'un quart de tour sur le manchon d'accouplement 31A entourant l'entraîneur 42 pour occuper une position verticale dans laquelle le bord inférieur du boitier 9 vient jouxter le socle 1.

De manière avantageuse, le bord inférieur du boitier 9 comprend un doigt de verrouillage 91 venant s'insérer automatiquement dans un orifice 54, visible sur la figure 13, ménagé dans l'embase 5 circulaire pour verrouiller le boitier 9 en position, un bouton de déverrouillage 92 étant prévu sur le boitier 9 pour ramener le doigt de verrouillage 91 vers l'intérieur du boitier 9 et permettre le désaccouplement du boitier 9 réducteur de vitesse.

Comme on peut le voir sur la figure 17, le boitier 9 comporte un arbre d'entrée 93 venant s'accoupler avec l'entraîneur 42 et un arbre de sortie 94 supportant un entraîneur basse vitesse 95, visible sur la figure 14, relié à l'arbre d'entrée 93 par un train d'engrenages permettant d'abaisser la vitesse de rotation de l'arbre de sortie 94 à 200 tr/min lorsque l'arbre d'entrée 93 tourne à 1500 tr/min.

Conformément aux figures 14 à 16, le boitier 9 réducteur de vitesse comporte une douille d'accouplement 96 autour de l'entraîneur basse vitesse 95 sur lequel peut être connecté par une liaison, de type quart de tour, un accessoire 97, 98 muni d'une goulotte pour l'introduction des aliments, de type tête pour râper les aliments 97 ou tête hachoir 98, une assiette 300 pouvant être disposée sur le plateau 10 du socle 1 pour recevoir les aliments issus directement de l'accessoire 97, 98.

Une telle disposition des bras inférieur 2 et supérieur 3 dans la position de travail verticale permet donc la réalisation des fonctions hacher ou râper avec une très bonne ergonomie d'utilisation, la goulotte d'introduction des aliments présentant l'avantage de rester à une hauteur relativement faible par rapport au socle 1 permettant à l'utilisateur d'avoir une bonne vision sur l'intérieur de la goulotte et de pouvoir exercer sans difficulté une pression sur les aliments présents dans la goulotte. De plus, dans cette position de travail verticale, le boitier 9 réducteur de vitesse présente l'avantage d'être en appui sur le socle 1 ce qui permet de ne pas exercer d'efforts importants sur les bras inférieur 2 et supérieur 3 lorsque l'utilisateur exerce une pression sur l'aliment disposé dans la goulotte.

Conformément aux figures 18 et 19, l'appareil peut également occuper une troisième position de travail, dite horizontale, dans laquelle le bras inférieur 2 s'étend parallèlement au socle 1 et le bras supérieur 3 est replié sur bras inférieur 2 de telle sorte que l'entraîneur 41 à haute vitesse soit disposé au sommet de l'appareil.

Dans cette position de l'appareil, un récipient de mixage 400 peut être accouplé sur le sommet du bras supérieur 3, ainsi que cela est illustré sur la figure 20, le récipient de mixage 400 renfermant un outil rotatif venant s'accoupler directement à l'entraîneur 41 pour être entraîné à haute vitesse. Lors de cette utilisation de l'appareil avec le récipient de mixage 400, la position repliée des bras supérieur 3 et inférieur 2 le long du socle 1 présente l'avantage de permettre l'obtention d'un appareil de faible hauteur, de l'ordre de 15 cm entre la face inférieur du socle 1 et la face supérieur du bras supérieur 3, de sorte que le sommet du récipient de mixage 400 reste facilement accessible et son contenu reste dans le champ visuel de l'utilisateur pour une plus grande ergonomie d'utilisation.

Cette position de travail horizontale présente également l'avantage de correspondre à une position de rangement de l'appareil dans laquelle l'encombrement de l'appareil est minimisé et présente une grande compacité lui permettant par exemple d'être disposé dans un tiroir.

L'appareil multifonctions ainsi réalisé présente donc l'avantage d'être à la fois particulièrement compact lorsqu'il est en position de rangement et de pouvoir occuper différentes positions de travail lui permettant d'être accouplé avec une grande variété d'accessoires en offrant, pour chacun de ces accessoires, une très bonne ergonomie d'utilisation.

Bien entendu, l'invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention tel qu'il est défini dans les revendications. Ainsi, dans une variante de réalisation, l'appareil pourra comporter des dispositifs de sécurité interdisant le fonctionnement du moteur lorsque les bras inférieur et supérieur n'occupent pas l'une des positions de travail de l'appareil. Ainsi, dans une autre variante de réalisation, les systèmes de verrouillage des bras inférieur et supérieur pourront assurer l'immobilisation des bras inférieur et supérieur dans davantage de positions.

## Revendications

1. Appareil électroménager de préparation culinaire comportant un socle (1) destiné à reposer à plat, et de manière amovible, sur un plan de travail, un bras inférieur (2) porté par le socle (1) et un bras supérieur (3) monté pivotant sur le bras inférieur (2) autour d'un unique axe X' parallèle au plan de travail, le bras supérieur (3) comportant au moins un entraîneur (42), entraîné en rotation par un moteur (4), destiné à être accouplé à un accessoire pour le traitement des aliments, le bras inférieur (2) étant relié au socle (1) par un dispositif d'articulation permettant le pivotement du bras inférieur sur le socle (1), les bras inférieur (2) et supérieur (3) pouvant occuper une position de rangement dans laquelle le bras inférieur (2) s'étend parallèlement au socle (1), au dessus de ce dernier, et le bras supérieur (3) s'étend le long du bras inférieur (2), le dispositif d'articulation du bras inférieur (2) permettant un mouvement de pivotement du bras inférieur (2) sur le socle (1) autour d'un axe X parallèle à l'axe X', **caractérisé en ce que** le dispositif d'articulation du bras inférieur permet une rotation du bras inférieur (2) autour d'un axe Y, dit vertical, perpendiculaire au plan de travail, la rotation autour de l'axe Y s'effectuant sur un secteur angulaire supérieur ou égal à 180° et préférentiellement proche de 340°.

2. Appareil électroménager de préparation culinaire selon la revendication 1, **caractérisé en ce que** le moteur (4) est disposé dans un logement (31) formant une excroissance sur la face inférieure du bras supérieur (3), ledit logement (31) s'insérant au moins partiellement dans une ouverture (21) du bras inférieur (2) lorsque le bras supérieur (3) occupe la position de rangement.

3. Appareil électroménager de préparation culinaire selon la revendication 2, **caractérisé en ce que** ladite ouverture (21) est traversante et permet d'accéder à l'entraîneur (42) lorsque le bras supérieur (3) est replié le long du bras inférieur.

4. Appareil électroménager de préparation culinaire selon l'une quelconque des revendications 1 à 3, **caractérisé en ce que** le bras supérieur (3) comporte un premier entraîneur (42) débouchant sur une face inférieure du bras supérieur (3) et un second entraîneur (41) débouchant sur une face supérieure du bras supérieur (3), le premier entraîneur (42) étant entraîné par le moteur (4) au travers d'un réducteur de vitesse, le second entraîneur (41) étant en prise directe avec un arbre de sortie du moteur (4).

5. Appareil électroménager de préparation culinaire selon la revendication 4, **caractérisé en ce que** la position de rangement constitue également une position de travail dans laquelle le second entraîneur (41) vient s'accoupler avec un accessoire (400) pour le traitement des aliments.

6. Appareil électroménager de préparation culinaire selon l'une quelconque des revendications 1 à 5, **caractérisé en ce que** le bras supérieur (3) comporte une poignée (30) de préhension s'étendant au moins pour partie devant une extrémité libre du bras supérieur (3).

7. Appareil électroménager de préparation culinaire selon l'une quelconque des revendications 1 à 6, **caractérisé en ce que** le bras inférieur (2) est relié au socle (1) par un premier dispositif d'articulation et le bras supérieur (3) est relié au bras inférieur (2) par un deuxième dispositif d'articulation, les premier et deuxième dispositifs d'articulation comportant des moyens de verrouillage permettant d'immobiliser les bras inférieur (2) et supérieur (3) dans au moins une position prédéterminée.

8. Appareil électroménager de préparation culinaire selon l'une quelconque des revendications 1 à 7, **caractérisé en ce que** le bras inférieur (2) et le bras supérieur (3) peuvent occuper une position de travail en équerre dans laquelle le bras inférieur (2) est disposé sensiblement verticalement et le bras supérieur (3) est disposé sensiblement perpendiculairement au bras inférieur (2).

9. Appareil électroménager de préparation culinaire selon l'une quelconque des revendications 1 à 8, **caractérisé en ce que** le bras inférieur (2) et le bras supérieur (3) peuvent occuper peut occuper une position de travail verticale dans laquelle le bras inférieur (2) s'étend sensiblement perpendiculairement au socle (1) et le bras supérieur (3) est replié le long du bras inférieur (2).

10. Appareil électroménager de préparation culinaire selon l'une quelconque des revendications 1 à 9, **caractérisé en ce que** le moteur (4) est alimenté électriquement par un cordon (45) d'alimentation pénétrant dans l'appareil au niveau du socle (1) et s'étendant à l'intérieur du bras inférieur (2) et du bras supérieur (3), les bras inférieur (2) et supérieur (3) comportant une structure creuse.

## Patentansprüche

1. Elektrisches Haushaltsgerät zur kulinarischen Zubereitung, das eine Basis (1), die dazu bestimmt ist flach und abnehmbar auf einer Arbeitsfläche zu ruhen, einen unteren Arm (2), der von der Basis (1) getragen wird, und einen oberen Arm (3) umfasst, der an dem unteren Arm (2) um eine einzige Achse X' schwenkbar parallel zu der Arbeitsebene angebracht ist, wobei der obere Arm (3) mindestens einen Antrieb (42) umfasst, der von einem Motor (4) angetrieben wird, wobei er dazu bestimmt ist, um mit einem Zubehör für die Verarbeitung von Nahrungsmitteln gekoppelt zu werden, wobei der untere Arm (2) mit der Basis (1) durch eine Gelenkvorrichtung verbunden ist, die das Schwenken des unteren Armes auf der Basis (1) ermöglicht, wobei der untere (2) und obere (3) Arm eine Lagerungsposition einnehmen können, in welcher sich der untere Arm (2) parallel zu der Basis (1) über dem letzteren erstreckt, und wobei sich der obere Arm (3) entlang des unteren Arms (2) erstreckt, wobei die Gelenkvorrichtung des unteren Armes (2) eine Schwenkbewegung des unteren Armes (2) auf der Basis (1) um eine Achse X parallel zu der Achse X' ermöglicht, **dadurch gekennzeichnet, dass** die Gelenkvorrichtung des unteren Arms einer Drehung des Unterarms (2) um eine Y-Achse, die vertikal genannt wird, senkrecht zu der Arbeitsebene ermöglicht, wobei die Drehung um die Y-Achse auf einem Winkelsektor durchgeführt wird, der größer oder gleich 180° und vorzugsweise nahe bei 340° ist.

2. Elektrisches Haushaltsgerät zur kulinarischen Zubereitung nach Anspruch 1, **dadurch gekennzeichnet, dass** der Motor (4) in einem Gehäuse (31) angeordnet ist, das eine Ausstülpung an der Unterseite des oberen Armes (3) bildet, wobei das Gehäuse (31) zumindest teilweise in eine Öffnung (21) des unteren Arms (2) eingefügt ist, wenn der obere Arm (3) die Lagerungsposition einnimmt.

3. Elektrisches Haushaltsgerät zur kulinarischen Zubereitung nach Anspruch 2, **dadurch gekennzeichnet, dass** die Öffnung (21) durchgehend ist und es ermöglicht, auf den Antrieb (42) zuzugreifen, wenn der obere Arm (3) entlang des unteren Arms gefaltet ist.

4. Elektrisches Haushaltsgerät zur kulinarischen Zubereitung nach einem der Ansprüche 1 bis 3, **dadurch gekennzeichnet, dass** der obere Arm (3) einen ersten Antrieb (42), der auf einer unteren Seite des oberen Armes (3) mündet, und einen zweiten Antrieb (41) umfasst, der auf einer oberen Seite des oberen Arms (3) mündet, wobei der erste Antrieb (42) von dem Motor (4) über ein Untersetzungsgetriebe angetrieben wird, und wobei der zweite Antrieb (41) in direktem Kontakt mit einer Ausgangswelle des Motors (4) ist.

5. Elektrisches Haushaltsgerät zur kulinarischen Zubereitung nach Anspruch 4, **dadurch gekennzeichnet, dass** die Lagerungsposition auch eine Arbeitsposition darstellt, wobei der zweite Antrieb (41) an ein Zubehörteil (400) für die Verarbeitung von Nahrungsmitteln gekoppelt ist.

6. Elektrisches Haushaltsgerät zur kulinarischen Zubereitung nach einem der Ansprüche 1 bis 5, **dadurch gekennzeichnet, dass** der obere Arm (3) einen Handgriff (30) zum Greifen umfasst, der sich zumindest teilweise vor einem freien Ende des oberen Arms (3) erstreckt.

7. Elektrisches Haushaltsgerät zur kulinarischen Zubereitung nach einem der Ansprüche 1 bis 6, **dadurch gekennzeichnet, dass** der untere Arm (2) mit der Basis (1) über eine erste Gelenkvorrichtung verbunden ist, und dass der obere Arm (3) mit dem unteren Arm (2) über eine zweite Gelenkvorrichtung verbunden ist, wobei die erste und die zweite Gelenkvorrichtung Mittel zu Verriegelung umfassen, die es ermöglichen, den unteren (2) und oberen (3) Arm in mindestens einer vorgegebenen Position zu immobilisieren.

8. Elektrisches Haushaltsgerät zur kulinarischen Zubereitung nach einem der Ansprüche 1 bis 7, **dadurch gekennzeichnet, dass** der untere Arm (2) und der obere Arm (3) eine Arbeitsposition im rechten Winkel einnehmen können, in welcher der untere Arm (2) im Wesentlichen vertikal angeordnet ist und der obere Arm (3) im Wesentlichen senkrecht zu dem unteren Arm (2) angeordnet ist.

9. Elektrisches Haushaltsgerät zur kulinarischen Zubereitung nach einem der Ansprüche 1 bis 8, **dadurch gekennzeichnet, dass** der untere Arm (2) und der obere Arm (3) eine vertikale Arbeitsposition einnehmen können einnehmen kann, in welcher sich der untere Arm (2) im Wesentlichen senkrecht zu der Basis (1) erstreckt und der obere Arm (3) entlang des unteren Arms (2) gefaltet ist.

10. Elektrisches Haushaltsgerät zur kulinarischen Zubereitung nach einem der Ansprüche 1 bis 9, **dadurch gekennzeichnet, dass** der Motor (4) elektrisch über ein Versorgungskabel (45) versorgt wird, das durch das Gerät bei der Basis (1) läuft, und sich ins Innere des unteren Armes (2) und des oberen Arms (3) erstreckt, wobei der untere (2) und obere (3) Arm eine Hohlstruktur aufweisen.

## Claims

1. Household food preparation appliance comprising a base (1) intended to be placed flat on a work surface from which it can be removed, a lower arm (2) borne by the base (1) and an upper arm (3) mounted on the lower arm (2) such that it can pivot about a single axis X' parallel to the work surface, the upper arm (3) comprising at least one drive mechanism (42) rotated by a motor (4) and intended to be coupled to a food processing accessory, the lower arm (2) being connected to the base (1) by a hinge means allowing the lower arm to pivot on the base (1), the lower arm (2) and the upper arm (3) being capable of occupying a storage position in which the lower arm (2) extends parallel to the base (1) above the latter, and the upper arm (3) extends along the length of the lower arm (2), the hinge means of the lower arm (2) allowing the lower arm (2) to move pivotably on the base (1) about an axis X that is parallel to the axis X', **characterised in that** the hinge means of the lower arm allows the lower arm (2) to rotate about a so-called vertical axis Y that is perpendicular to the work surface, whereby the rotation about the axis Y occurs in an angular sector that is greater than or equal to 180° and preferably close to 340°.

2. Household food preparation appliance according to claim 1, **characterised in that** the motor (4) is arranged in a recess (31) forming a protuberance on the inner surface of the upper arm (3), said recess (31) being at least partially inserted inside an aperture (21) of the lower arm (2) when the upper arm (3) is in the storage position.

3. Household food preparation appliance according to claim 2, **characterised in that** said aperture (21) is penetrating and provides access to the drive mechanism (42) when the upper arm (3) is folded against the length of the lower arm.

4. Household food preparation appliance according to any of claims 1 to 3, **characterised in that** the upper arm (3) comprises a first drive mechanism (42) opening out onto a lower surface of the upper arm (3) and a second drive mechanism (41) opening out onto an upper surface of the upper arm (3), the first drive mechanism (42) being driven by the motor (4) through a reduction gear, the second drive mechanism (41) being in direct contact with an output shaft of the motor (4).

5. Household food preparation appliance according to claim 4, **characterised in that** the storage position further constitutes a working position in which the second drive mechanism (41) is coupled to a food processing accessory (400).

6. Household food preparation appliance according to any of claims 1 to 5, **characterised in that** the upper arm (3) comprises a grasping handle (30) at least partially extending in front of a free end of the upper arm (3).

7. Household food preparation appliance according to any of claims 1 to 6, **characterised in that** the lower arm (2) is connected to the base (1) by a first hinge means and the upper arm (3) is connected to the lower arm (2) by a second hinge means, the first and the second hinge means comprising locking means for immobilising the lower arm (2) and upper arm (3) in at least one predetermined position.

8. Household food preparation appliance according to any of claims 1 to 7, **characterised in that** the lower arm (2) and the upper arm (3) can take on a right-angled working position in which the lower arm (2) is positioned substantially vertically and the upper arm (3) is positioned substantially perpendicular to the lower arm (2).

9. Household food preparation appliance according to any of claims 1 to 8, **characterised in that** the lower arm (2) and the upper arm (3) can take on can take on a vertical working position in which the lower arm (2) extends substantially perpendicularly to the base (1) and the upper arm (3) is folded against the length of the lower arm (2).

10. Household food preparation appliance according to any of claims 1 to 9, **characterised in that** the motor (4) is electrically powered by a power supply cord (45) penetrating the appliance at the level of the base (1) and extending within the lower arm (2) and the upper arm (3), the lower arm (2) and the upper arm (3) comprising a hollow structure.
